# EUROPÄISCHE PATENTSCHRIFT

(11) **EP 1 765 618 B1**
(45) Veröffentlichungstag und Bekanntmachung des Hinweises auf die Patenterteilung: **14.01.2009**
(21) Anmeldenummer: 05763738.1
(22) Anmeldetag: 04.07.2005
(51) Int. Cl.: B60G 21/055

(54) **GETEILTER STABILISATOR MIT OPTIMIERTER FEDERRATE**
DIVIDED STABILIZER FEATURING AN OPTIMIZED SPRING CONSTANT
STABILISATEUR EN DEUX PARTIES A TAUX D'ELASTICITE OPTIMISE

(30) Priorität: 14.07.2004 DE 102004034217
(43) Veröffentlichungstag der Anmeldung: 28.03.2007
(73) Patentinhaber: ZF Friedrichshafen AG, 88038 Friedrichshafen (DE)
(72) Erfinder: BEETZ, Stefan, 19089 Barnin (DE); KRÜGER, Winfried, 19370 Parchim (DE); BAUSTIAN, Torsten, 19089 Crivitz (DE)
(86) Internationale Anmeldenummer: PCT/DE2005/001176
(87) Internationale Veröffentlichungsnummer: WO 2006/005307

(56) Entgegenhaltungen:
- DE-A1- 10 012 915
- DE-A1- 19 754 539
- DE-B3- 10 243 696
- US-A- 5 700 027
- PATENT ABSTRACTS OF JAPAN Bd. 1998, Nr. 06, 30. April 1998 (1998-04-30) & JP 10 054405 A (KAYABA IND CO LTD), 24. Februar 1998 (1998-02-24)

## Beschreibung

Die Erfindung bezieht sich auf einen geteilten Stabilisator nach den Merkmalen des Oberbegriffs des Anspruchs 1. Solche Stabilisatoren werden insbesondere in der Fahrzeugtechnik eingesetzt.

Grundsätzlich ist jeder Achse eines Kraftfahrzeuges ein Stabilisator zugeordnet, der nach dem Drehstabprinzip arbeitet und der parallel zur Fahrzeugachse angeordnet und an beiden Enden an einer Radaufhängung befestigt ist. Dieser Stabilisator verhindert bzw. schwächt die Übertragung der von den Fahrbahnverhältnissen verursachten und von den Rädern ausgehenden Wankbewegungen auf das Fahrzeug wesentlich ab. Solche Wankbewegungen treten insbesondere in Fahrbahnkurven oder bei unebenen Fahrbahnverhältnissen auf.

Einteilige Stabilisatoren sind in ihrer Dimensionierung und in ihrer Materialbeschaffenheit auf eine vorbestimmte Federrate ausgelegt, sodass sie Torsionskräfte nur in einer bestimmten Größenordnung aufnehmen und entsprechende Gegenkräfte aufbringen können. Einteilige Stabilisatoren reagieren daher auf unterschiedliche Belastungen entweder zu weich oder zu hart, was sich nachteilig auf den Fahrkomfort auswirkt. Daher sind einteilige Stabilisatoren für Kraftfahrzeuge, die sowohl für den Einsatz auf der Straße als auch im Gelände vorgesehen sind, grundsätzlich nur bedingt geeignet. Für solche Anwendungen wird daher ein geteilter Stabilisator eingesetzt, der aus zwei Stabilisatorteilen besteht und die beide über einen, den Drehwinkel vergrößernden Aktuator miteinander verbunden sind. Ein solcher Aktuator kann beispielsweise ein hydraulischer Schwenkmotor, eine elastische Drehkupplung oder eine schaltbare Kupplung sein.

Ein jeder dieser Aktuatoren besteht grundsätzlich aus einem äußeren Drehteil, der über einen Deckel und einen Flansch mit einem der beiden Stabilisatorteile verbunden ist und einem inneren Drehteil, der über eine Welle mit dem anderen Stabilisatorteil Verbindung hat. Beide Drehteile des Aktuators sind in einem begrenzten Winkel gegeneinander drehbar ausgeführt. Als Verbindungsteile zwischen dem Flansch und dem einen Stabilisatorteil sowie zwischen der Welle und dem anderen Stabilisatorteil kommen in der Regel herkömmliche Klemm- oder Schraubbuchsen zur Anwendung.

Solche geteilten Stabilisatoren werden den unterschiedlichsten Anforderungen gerecht. Sie haben aber einen wesentlichen Nachteil. So stellt jeder Aktuator eine Kompakteinheit mit einer beträchtlichen Längenausdehnung dar, die im entsprechenden Umfang zu Lasten der wirksamen federnden Längen der beiden Stabilisatorteile geht.

Zur Verbesserung der Federrate wurde aus der DE 100 12 915 A1 ein geteilter Stabilisator mit einer optimierten Federrate bekannt, bei dem das äußere Drehteil des Aktuators mit dem einen Stabilisatorteil und das innere Drehteil des Aktuators mit dem anderen Stabilisatorteil jeweils einteilig ausgeführt ist. Damit wird das eine Stabilisatorteil bis in die radiale Ebene der krafterzeugenden Drehteile des Aktuators verlängert, sodass die beiden Stabilisatorteile nur noch um einen geringen axialen Abstand zueinander wirksam unterbrochen sind. Das hat funktionelle Vorteile, ist aber wegen der Länge und der mehrfach gekrümmten Form des Stabilisatorteils sowie wegen der erforderlichen hohen Passgenauigkeit des inneren Drehteiles des Aktuators nur mit einem erhöhten Aufwand herzustellen.

Aus der US 5,700,027 ist nun ein entsprechender Schwenkmotor bekannt, dessen inneres Drehteil zwei axiale und gegenüberliegende Sacklochbohrungen besitzt. Beide Sacklochbohrungen sind unterschiedlich tief ausgelegt, wobei die tiefere Sachlochbohrung mit einem Innenprofil zur Verbindung mit einem entsprechend ausgeformten ersten Stabilisatorteil ausgestattet ist und die kürzere Sacklochbohrung zur Aufnahme eines profillosen Endes des zweiten Stabilisatorteiles ausgelegt ist. Die unterschiedlichen Längen der Sacklochbohrungen und ihre unterschiedliche Ausformung sollen ein Vertauschen der beiden Stabilisatorteile während der Montage verhindern. Dazu sind die Böden der beiden Sacklochbohrungen als Anschläge für die beiden Stabilisatorteile ausgelegt. Beide Sacklochbohrungen sind axial soweit voneinander beabstandet, dass ausreichend Bauraum für die Hindurchführung von Verbindungskanälen für die Druck- und Saugkammern des Schwenkmotors verbleibt.

Mit der zweiteiligen Ausführung und der profilen Verbindung vom inneren Drehteil zu dem einen Stabilisatorteil werden zwar die fertigungsbedingten Nachteile gegenüber der einteiligen Variante beseitigt, wobei durch die Notwendigkeit der zweiten Sacklochbohrung im inneren Drehteil gleichzeitig wieder eine Erhöhung des Herstellungsaufwandes für die Verbindung des äußeren Drehteiles mit dem zweiten Stabilisatorteil in Kauf genommen werden muss. Dazu kommt kostenerhöhend hinzu, dass das kraftübertragende Profil in der Sacklochbohrung nur in aufwendiger Weise gestoßen werden kann. Von Nachteil ist auch, dass die Profilverbindung zwischen dem inneren Drehteil und dem entsprechenden Stabilisatorteil als eine reine Formschlussverbindung ausgeführt ist. Ein solcher Formschluss ist aber grundsätzlich mit einem Spiel zwischen den beiden Bauteilen verbunden, das funktionelle Nachteile mit sich bringt und das fertigungstechnisch nur mit einem unvertretbar hohen Aufwand minimiert werden kann.

Ein wesentlicher Nachteil tritt aber dadurch ein, dass die Profilverbindung des inneren Drehteiles mit dem ersten Stabilisatorteil außerhalb der axialen Mitte der für die Krafterzeugung maßgeblichen axialen Länge der Drehflügel angeordnet ist. Das hat seine Ursache im Vorhandensein der gegenüberliegenden Sacklochbohrung und der radialen Druckkammerverbindungskanäle. Diese Außermittigkeit führt zu einer Verkürzung der wirksamen Federlänge des ersten Stabilisatorteiles und damit zu einer Verschlechterung der Federrate.

Es besteht die Aufgabe, für einen geteilten Stabilisator mit einer wirksam verlängerten Federlänge eine Möglichkeit zuschaffen, die Druckräume und Saugräume eines gattungsgemäßen Stabilisators zu verbinden.

Diese Aufgabe wird durch die kennzeichnenden Merkmale des Anspruchs 1 gelöst. Zweckdienliche Ausgestaltungen ergeben sich aus den Unteransprüchen 2 bis 3.

Der neue geteilte Stabilisator beseitigt die genannten Nachteile des Standes der Technik.

Dabei liegt der besondere Vorteil in der optimalen Ausnutzung der Federlänge des Stabilisatorteils, weil die axiale Mitte der kraftübertragenden Länge des zweiten Stabilisatorteils und die axiale Mitte der kraftübertragenden Länge des inneren Drehteils auf einer gemeinsamen radialen Ebene liegen. Damit wird die wirksame Federlänge des zweiten Stabilisatorteils optimal verlängert und die wirksame Länge des äußeren Drehteils optimal verkürzt. Dadurch verbessert sich die Federrate des geteilten Stabilisators gegenüber dem vergleichbaren und nächstkommenden Stand der Technik der US 5,700,027, gleichzeitig wird es ermöglicht, bei Schwenkmotoren mit zwei oder mehr Druckkammern bzw. Saugkammern die beiden radialen Verbindungskanäle zwischen den druckgleichen und gegenüberliegenden Druck- und Saugräumen im Bereich der spielfreien Passverbindung einzubringen, weil dann die radialen Verbindungskanäle allein durch den Presssitz der beteiligten Bauteile ausreichend nach außen und untereinander gegen Lecköl abgedichtet sind. Zusätzliche Dichtelemente können damit entfallen. Erfindungsgemäß ist dabei vorgesehen, die radialen Verbindungskanäle als zwei in die entsprechende Passbohrung des inneren Drehteils nebeneinander angeordneten Ringkanälen auszubilden und diese beiden Ringkanäle jeweils über radiale Kanäle mit den Druckräumen oder Saugräumen zu verbinden. Diese Ausbildung ist fertigungstechnisch besonders vorteilhaft.

Dabei ist die Herstellung der neuen kraftschlüssigen Verbindung zwischen dem inneren Drehteil und dem Stabilisatorteil sowohl gegenüber der US 5,700,027 als auch gegenüber der DE 100 12 915 A1 einfacher und kostengünstiger.

So ist es zweckmäßig, das innere Drehteil mit einer durchgehenden Passbohrung und das entsprechende Stabilisatorteil mit einem Passzylinder auszuführen und diese Passverbindung mit einem negativen Spiel auszustatten und miteinander zu verschrumpfen. Diese Verbindungsart ist sehr kostengünstig herzustellen, weil dabei auf einfache und konventionelle Bearbeitungsverfahren zurückgegriffen werden kann.

Es ist alternativ auch sehr zweckmäßig, das innere Drehteil mit einem Verbindungszapfen des entsprechenden Stabilisatorteils über ein Verzahnungsteil und ein Passteil zu verbinden, wobei sowohl das Verzahnungsteil als auch das Passteil mit einem negativen Spiel hergestellt und dann zusammen aufgeschrumpft werden. Dabei sind die geschrumpfte Verzahnung und die geschrumpfte Passung so ausgeführt, dass beide Verbindungsarten gleichermaßen an der Kraftübertragung beteiligt sind.

Durch die Verwendung eines Verzahnungsteils tritt zunächst der Vorteil ein, dass sich mit dem Formschluss die Verdrehsicherheit erhöht. Andererseits ermöglicht die Verzahnung eine sehr genaue und leicht zu handhabende Ausrichtung des Stabilisierungsteils mit dem inneren Drehteil während der Montage des Schwenkmotors.

Auch diese Ausführungsform mit einem Verzahnungsteil und einem Passteil ist sehr einfach herzustellen, weil die Herstellung der Passverbindung im herkömmlichen Verfahren und die Herstellung der Verzahnung im inneren Drehteil im einfachen und kostengünstigen Räumverfahren erfolgen können.

Die Erfindung soll an Hand zweier Ausführungsbeispiele näher erläutert werden. Dazu zeigen:
- Fig. 1:: einen Schwenkmotor im Längsschnitt in einem ersten Ausführungsbeispiel,
- Fig. 2:: einen Schwenkmotor im Längsschnitt in einem zweiten Ausführungsbeispiel,
- Fig. 3:: den Schwenkmotor beider Ausführungsbeispiele im Querschnitt und
- Fig. 4:: den Schwenkmotor mit einem Stabilisatorteil.

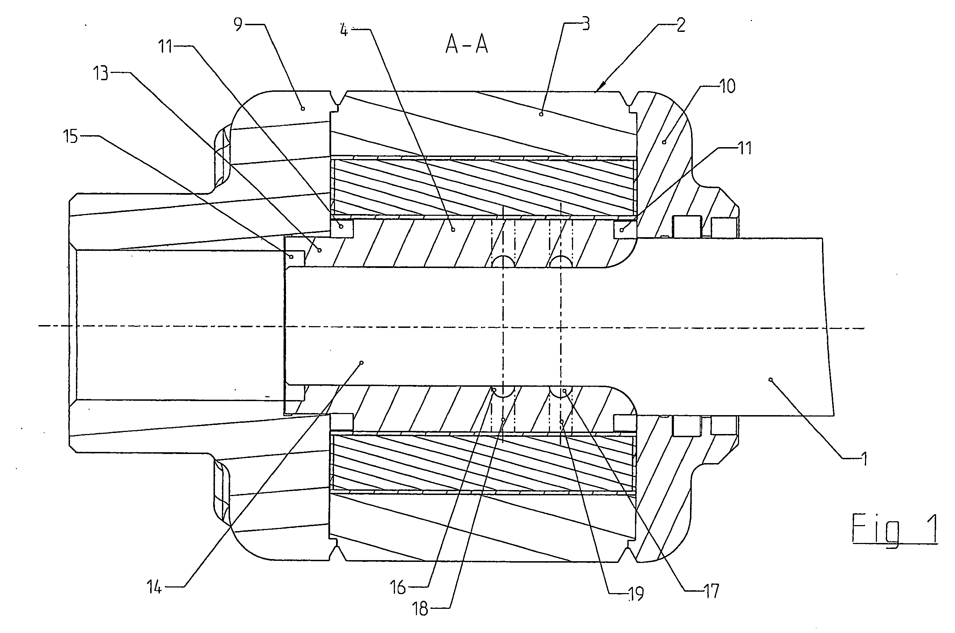

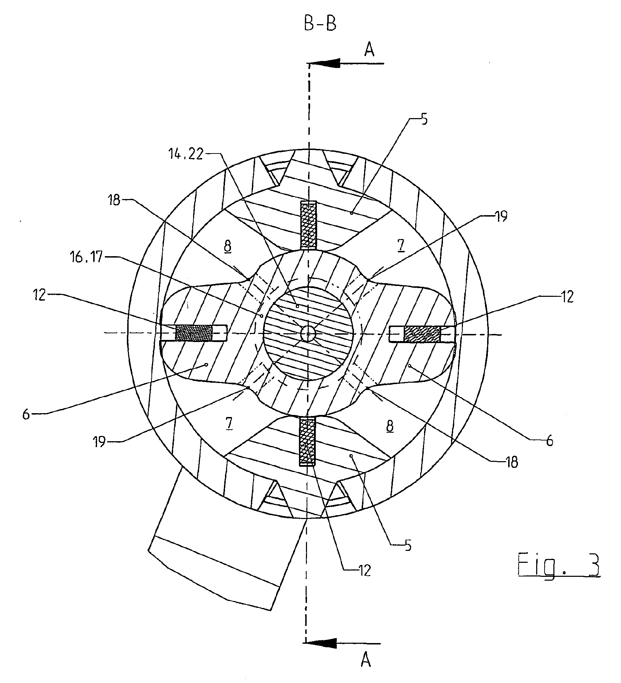

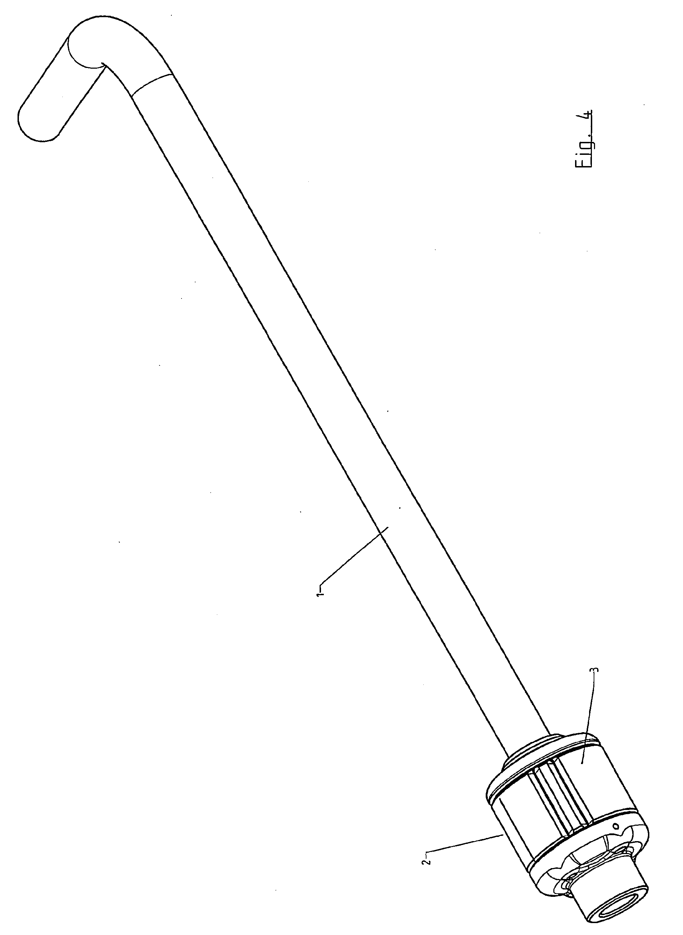

Gemäß der genannten Fig. 1 bis 4 besteht ein geteilter Stabilisator aus einem ersten, nicht dargestellten Stabilisatorteil und einem zweiten Stabilisatorteil 1, die beide über einen hydraulischen Schwenkmotor 2 verbunden sind. Dabei sind das erste, nicht dargestellte Stabilisatorteil, das zweite Stabilisatorteil 1 und der hydraulische Schwenkmotor 2 auf einer gemeinsamen Achse angeordnet. Der Schwenkmotor 2 besteht aus einem äußeren Drehteil 3 und einem inneren Drehteil 4, wobei das äußere Drehteil 3 zwei äußere Drehflügel 5 besitzt, die fest mit dem äußeren Drehteil 3 verbunden und radial nach innen gerichtet sind, und das innere Drehteil 4 mit zwei angepassten inneren Drehflügel 6 ausgeformt ist, die radial nach außen gerichtet sind. Dabei sind die äußeren Drehflügel 5 und die inneren Drehflügel 6 in ihrer Gestaltung so ausgeführt, dass sie zwischen sich zwei gegenüberliegende Druckräume 7 und zwei ebenfalls gegenüberliegende Saugräume 8 ausbilden. Im Bereich dieser Druckräume 7 und Saugräume 8 sind die äußeren Drehflügel 5 und die inneren Drehflügel 6 gegeneinander frei drehbar, bis sie auf gegenseitigen Anschlag zu liegen kommen. Axial werden die Druckräume 7 und die Saugräume 8 einerseits durch einen Lagerdeckel 9 und andererseits durch einen Flanschdeckel 10 begrenzt, die vorzugsweise mit dem äußeren Drehteil 3 druckdicht verschweißt sind. Wellendichtelemente 11 am inneren Drehteil 4 und Rahmendichtelemente 12 in den beiden äußeren Drehflügeln 5 und den beiden inneren Drehflügeln 6 dichten die Druckräume 7 und die Saugräume 8 nach außen und auch untereinander nach innen ab. Der Lagerdeckel 9 ist mit einer axialen Lagerbohrung ausgestattet, in der ein entsprechender Lagerzapfen 13 des inneren Drehteils 4 eingepasst ist.

In dem ersten Ausführungsbeispiel gemäß der Fig. 1 sind das innere Drehteil 4 und das zweite Stabilisatorteil 1 in besonderer Weise über eine Presspassung miteinander verbunden. Dazu besitzt das innere Drehteil 4 eine durchgängige Passbohrung und das zweite Stabilisatorteil 1 einen gegenüber dem zweiten Stabilisatorteil 1 im Durchmesser verringerten Passzylinder 14, der sich über die ganze axiale Länge der durchgängigen Passbohrung des inneren Drehteils 4 erstreckt. Die durchgängige Passbohrung des inneren Drehteils 4 und der Passzylinder 14 des Stabilisatorteils 1 sind mit einem negativen Spiel zueinander hergestellt und durch einen Aufschrumpfungsvorgang spielfrei miteinander verbunden. Zusätzlich ist das zweite Stabilisatorteil 1 mit dem inneren Drehteil 4 über eine Schweißnaht 15 verbunden, die sich im Stirnbereich des freien Endes des Passzylinders 14 des zweiten Stabilisatorteils 1 befindet. Mit der geschrumpften Passverbindung und der Schweißverbindung sind das zweite Stabilisatorteil 1 und das innere Drehteil 4 kraftschlüssig miteinander verbunden und zur Übertragung eines entsprechenden Drehmomentes geeignet.

Das innere Drehteil 4 besitzt in seiner durchgängigen Passbohrung im Bereich der aufgeschrumpften Passung einen ersten radialen Ringkanal 16 und einen zweiten radialen Ringkanal 17, die beide in einem axialen Abstand zueinander angeordnet und die durch den Passzylinder 14 des zweiten Stabilisatorteils 1 nach innen abgedeckt sind. Der erste radiale Ringkanal 16 ist über zwei radiale Kanäle 18 mit den beiden gegenüberliegenden Druckräumen 7 oder Saugräumen 8 des Schwenkmotors und der zweite radiale Ringkanal 16 ist über zwei radiale Kanäle 19 mit den beiden gegenüberliegenden Saugräumen 8 oder Druckräumen 7 verbunden. Damit sind die jeweiligen beiden Druckräume 7 und die jeweiligen beiden Saugräume 8 im Druck ausgeglichen ausgeführt, wobei die beiden radialen Ringkanäle 16, 17 durch die Pressverbindung zwischen dem Passzylinder 14 des zweiten Stabilisatorteils 1 und dem inneren Drehteil 4 nach außen und untereinander gegen Lecköl druckdicht verschlossen sind.

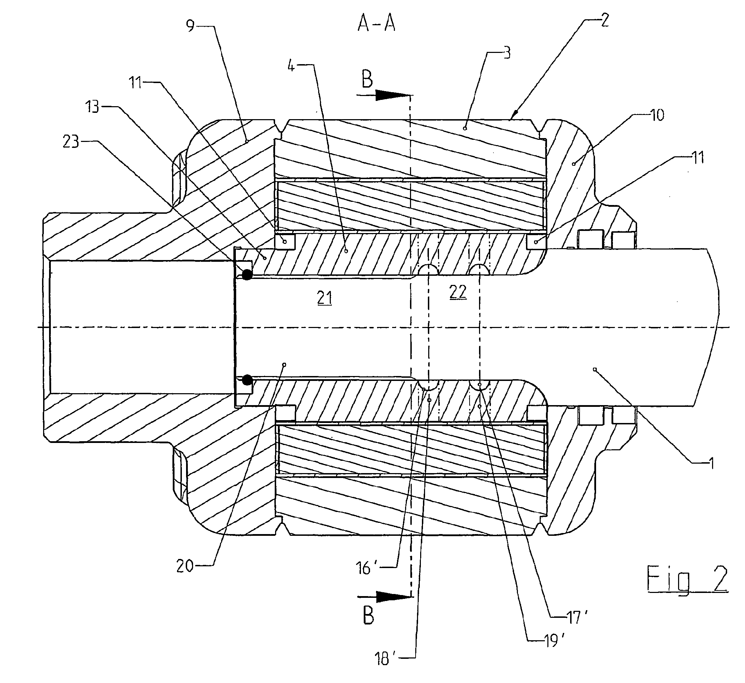

Im zweiten Ausführungsbeispiel gemäß der Fig. 2 sind das innere Drehteil 4 und das zweite Stabilisatorteil 1 in besonderer Weise über eine Presspassung und eine Verzahnung miteinander verbunden. Dazu besitzt das innere Drehteil 4 wiederum eine Durchgangsbohrung und das Stabilisatorteil 1 einen durchgehenden und sich im Durchmesser gegenüber dem zweiten Stabilisatorteil 1 verringernden Verbindungszapfen 20, die beide ein Verzahnungsteil 21 und ein Passteil 22 ausbilden. Das Verzahnungsteil 21 und das Passteil 22 sind axial nebeneinander angeordnet, wobei sich das Verzahnungsteil 21 am freien Ende des zweiten Stabilisatorteils 1 befindet. Das Verzahnungsteil 21 besteht aus einem entsprechenden Innenprofil in der Durchgangsbohrung des inneren Drehteils 4 und aus einem dazu passenden Außenprofil am Verbindungszapfen 20 des zweiten Stabilisatorteils 1, während das Passteil 22 aus einer Passbohrung im inneren Drehteil 4 und aus einem Passzylinder am Verbindungszapfen 20 des zweiten Stabilisatorteils 1 besteht.

Dabei weist die Profilverbindung zwischen dem zweiten Stabilisator 1 und dem inneren Drehteil 4 eine hohe Zähnezahl auf, um zum einen eine hohe Tragfähigkeit der kraftübertragenden Zähne und zum anderen eine genaue und feinfühlige Ausrichtungsmöglichkeit für die Montage des zweiten Stabilisatorteiles 1 mit dem inneren Drehteil 4 zu erhalten. Das Außenprofil des zweiten Stabilisatorteils 1 und das Innenprofil des inneren Drehteiles 4 sowie die Passbohrung im inneren Drehteil 4 und der Passzylinder am Verbindungszapfen 20 des zweiten Stabilisatorteils 1 sind jeweils mit einem negativen Spiel zueinander ausgeführt und durch einen Aufschrumpfungsvorgang spielfrei miteinander montiert. Damit sind das zweite Stabilisatorteil 1 und das innere Drehteil 4 form- und kraftschlüssig miteinander verbunden und zur Übertragung von entsprechenden Drehmomenten geeignet. Am freien Ende des zweiten Stabilisatorteiles 1 ist ein Sicherungsring 23 angeordnet, der eine zusätzliche axiale Absicherung zwischen dem zweiten Stabilisatorteil 1 und dem inneren Drehteil 4 übernimmt.

Auch in diesem Ausführungsbeispiel besitzt das innere Drehteil 4 in seiner Durchgangsbohrung einen ersten radialen Ringkanal 16' und einen zweiten radialen Ringkanal 17', die beide im Passteil 22 und in einem axialen Abstand zueinander angeordnet sind. Dabei ist der erste radiale Ringkanal 16' über die beiden radialen Kanäle 18' mit den beiden gegenüberliegenden Druckräumen 7 oder Saugräumen 8 und der zweite radiale Ringkanal 17' über die beiden radialen Kanäle 19' mit den beiden gegenüberliegenden Saugräumen 8 oder Druckräumen 7 verbunden.

Damit sind die jeweiligen beiden Druckräume 7 und die jeweiligen beiden Saugräume 8 im Druck ausgeglichen ausgeführt, wobei beide radialen Ringkanäle 16', 17' durch den Passzylinder des Passteils 22 abgedeckt und durch die Pressverbindung zwischen dem Passzylinder des Passteils 22 und dem inneren Drehteil 4 gegen Lecköl druckdicht nach außen und untereinander abgedichtet sind.

### Bezugszeichenliste

- 1: zweites Stabilisatorteil
- 2: Schwenkmotor
- 3: äußeres Drehteil
- 4: inneres Drehteil
- 5: äußerer Drehflügel
- 6: innerer Drehflügel
- 7: Druckraum
- 8: Saugraum
- 9: Lagerdeckel
- 10: Flanschdeckel
- 11: Wellendichtelement
- 12: Rahmendichtelement
- 13: Lagerzapfen
- 14: Passzylinder
- 15: Schweißnaht
- 16, 16': erster radialer Ringkanal
- 17, 17': zweiter radialer Ringkanal
- 18, 18': radialer Kanal
- 19, 19': radialer Kanal
- 20: Verbindungszapfen
- 21: Verzahnungsteil
- 22: Passteil
- 23: Sicherungsring

## Patentansprüche

1. Geteilter Stabilisator mit optimierter Federrate, bestehend aus einem ersten Stabilisatorteil, einem zweiten Stabilisatorteil (1) und einem Schwenkmotor (2), die alle auf einer gemeinsamen Achse angeordnet sind, wobei der Schwenkmotor (2) aus einem äußeren Drehteil (3) und einem inneren Drehteil (4) besteht, die im Zusammenwirken mit einem Lagerdeckel (9) und einem Flanschdeckel (10) zwei oder mehr gegenüberliegende Druckräume (7) und zwei oder mehr gegenüberliegende Saugräume (8) ausbilden und die Druckräume (7) und Saugräume (8) jeweils über einen radialen Verbindungskanal verbunden sind, und das äußere Drehteil (3) des Schwenkmotors (2) drehfest mit dem ersten Stabilisatorteil verbunden ist und zwischen dem inneren Drehteil (4) des Schwenkmotors (2) und dem zweiten Stabilisatorteil (1) eine kraftübertragende kraftschlüssige Verbindung besteht,
wobei die kraftschlüssige Verbindung so ausgeführt ist, dass die axiale Mitte der kraftübertragenden Länge des zweiten Stabilisatorteils (1) und die axiale Mitte der kraftübertragenden Länge des inneren Drehteils (4) auf einer gemeinsamen radialen Ebene liegen und wobei die kraftschlüssige Verbindung zwischen dem inneren Drehteil (4) und einem Passzylinder (14) des zweiten Stabilisatorteils (1) aus einer aufgeschrumpften Passung besteht oder die kraftschlüssige Verbindung zwischen dem inneren Drehteil (4) und einem Verbindungszapfen (20) des zweiten Stabilisatorteils (1) aus einem Verzahnungsteil (21) und einem Passteil (22) besteht, die beide aufgeschrumpft sind, wobei die radialen Verbindungskanäle im Bereich der spielfreien Passverbindung zwischen dem inneren Drehteil (4) und dem zweiten Stabilisatorteil (1) eingebracht sind,
**dadurch gekennzeichnet, dass**
das innere Drehteil (4) zur Aufnahme des zweiten Stabilsatorteils eine durchgehende Bohrung aufweist, welche im Bereich des Passteils (22) oder des Passzylinders (14) zwei nebeneinander angeordnete Ringkanäle (18, 16',17, 17') besitzt, die vom Passzylinder (14) oder vom Passteils (22) des Verbindungszapfen (20) abgedeckt sind und die über radiale Kanäle (18, 18', 19, 19') mit den entsprechenden Druckräumen (7) oder Saugräumen (8) verbunden sind.

2. Geteilter Stabilisator nach Anspruch 1,
**dadurch gekennzeichnet, dass** das innere Drehteil (4) und der Passzylinder (14) zusätzlich über eine Schweißnaht (25) verbunden sind, wobei sich die Schweißnaht (15) am freien Ende des Passzylinders (14) befindet.

3. Geteilter Stabilisator nach Anspruch 1,
**dadurch gekennzeichnet, dass** das innere Drehteil (4) und der Verbindungszapfen (20) zusätzlich über einen Sicherungsring (23) axial gesichert sind.

## Claims

1. Split stabilizer with an optimized spring rate, comprising a first stabilizer part, a second stabilizer part (1) and an oscillating motor (2), which are all disposed on a common axis, wherein the oscillating motor (2) comprises an outer swivel element (3) and an inner swivel element (4), which in interaction with a bearing cover (9) and a flange cover (10) form two or more opposing discharge spaces (7) and two or more opposing suction spaces (8), and the discharge spaces (7) and suction spaces (8) are connected in each case by a radial connection channel, and the outer swivel element (3) of the oscillating motor (2) is connected in a rotationally fixed manner to the first stabilizer part and between the inner swivel element (4) of the oscillating motor (2) and the second stabilizer part (1) there is a load-transmitting friction-locking connection,
wherein the friction-locking connection is so designed that the axial centre of the load-transmitting length of the second stabilizer part (1) and the axial centre of the load-transmitting length of the inner swivel element (4) lie on a common radial plane and wherein the friction-locking connection between the inner swivel element (4) and a close-tolerance cylinder (14) of the second stabilizer part (1) comprises a shrink-fit or the friction-locking connection between the inner swivel element (4) and a connection spigot (20) of the second stabilizer part (1) comprises a toothed part (21) and a close-tolerance part (22), which are both shrink-fitted, wherein the radial connection channels are introduced in the region of the play-free close-tolerance connection between the inner swivel element (4) and the second stabilizer part (1),
**characterized in that**
the inner swivel element (4) for receiving the second stabilizer part has a through-bore, which in the region of the close-tolerance part (22) or the close-tolerance cylinder (14) has two annular channels (16, 16', 17, 17') disposed adjacent to one another, which are covered by the close-tolerance cylinder (14) or by the close-tolerance part (22) of the connection spigot (20) and which are connected by radial channels (18, 18', 19, 19') to the corresponding discharge spaces (7) or suction spaces (8).

2. Split stabilizer according to claim 1, **characterized in that** the inner swivel element (4) and the close-tolerance cylinder (14) are additionally connected by a weld seam (15), wherein the weld seam (15) is situated at the free end of the close-tolerance cylinder (24).

3. Split stabilizer according to claim 1, **characterized in that** the inner swivel element (4) and the connection spigot (20) are additionally secured axially by means of a locking ring (23).

## Revendications

1. Stabilisateur en plusieurs parties avec caractéristique de ressort optimisée, constitué d'une première partie de stabilisateur, d'une seconde partie de stabilisateur (1) et d'un moteur oscillant (2), lesquelles sont disposées sur un axe commun, le moteur oscillant (2) étant constitué d'une partie tournante extérieure (3) et d'une partie tournante intérieure (4) qui en coopération avec un couvercle de palier (9) et un couvercle bridé (10) réalisent deux chambres sous pression (7) ou plus opposées les unes aux autres et deux chambres d'aspiration (8) ou plus opposées les unes aux autres, et les chambres sous pression (7) ainsi que les chambres d'aspiration (8) sont reliées dans chaque cas par un canal de liaison radial, et en ce que la partie tournante extérieure (3) du moteur oscillant (2) est reliée solidairement en rotation à la première partie de stabilisateur, et il existe une liaison à force, transmettant les forces, entre la partie tournante intérieure (4) du moteur oscillant (2) et la seconde partie de stabilisateur (1),
la liaison à force étant réalisée de manière que le milieu axial de la longueur transmettant les forces de la seconde partie de stabilisateur (1) et le milieu axial de la longueur transmettant les forces de la partie tournante intérieure (4), se situent sur un plan radial commun, et la liaison à force entre la partie tournante intérieure (4) et un cylindre d'ajustement (14) de la seconde partie de stabilisateur (1) étant constituée d'un ajustement fretté, ou la liaison à force entre la partie tournante intérieure (4) et une tige de liaison (20) de la seconde partie de stabilisateur (1) étant constituée d'une partie dentée (21) et d'une partie d'ajustement (22), les deux étant frettées, les canaux de liaison radiaux étant pratiqués dans la zone de la liaison ajustée sans jeu entre la partie tournante intérieure (4) et la seconde partie de stabilisateur (1),
**caractérisé en ce que**
la partie tournante intérieure (4) présente, pour recevoir la seconde partie de stabilisateur, un trou débouchant qui possède, dans la zone de la partie d'ajustement (22) ou du cylindre d'ajustement (14), deux canaux annulaires (16, 16', 17, 17') disposés côte à côte, qui sont recouverts par le cylindre d'ajustement (14) ou la partie d'ajustement (22) de la tige de liaison (20), et qui sont reliés par des canaux radiaux (18, 18', 19, 19') aux chambres sous pression (7) ou chambres d'aspiration (8) correspondantes.

2. Stabilisateur en plusieurs parties selon la revendication 1,
**caractérisé en ce que** la partie tournante intérieure (4) et le cylindre d'ajustement (14) sont reliés en outre par un cordon de soudure (15), le cordon de soudure (15) se trouvant à l'extrémité libre du cylindre d'ajustement (14).

3. Stabilisateur en plusieurs parties selon la revendication 1,
**caractérisé en ce que** la partie tournante intérieure (4) et la tige de liaison (20) sont en outre bloquées axialement par une bague de sûreté (23).
